(19) Europäisches Patentamt
European Patent Office
Office européen des brevets

(11) EP 3 985 996 A1

(12) **EUROPEAN PATENT APPLICATION**
published in accordance with Art. 153(4) EPC

(43) Date of publication:
**20.04.2022 Bulletin 2022/16**

(21) Application number: **20823630.7**

(22) Date of filing: **21.04.2020**

(51) International Patent Classification (IPC):
***H04R 7/14*** *(2006.01)*

(86) International application number:
**PCT/CN2020/085753**

(87) International publication number:
**WO 2020/248718 (17.12.2020 Gazette 2020/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.06.2019 CN 201910516851**

(71) Applicant: **Goertek Inc**
**Weifang, Shandong 261031 (CN)**

(72) Inventors:
- **HUI, Bing**
  **Weifang, Shandong 261031 (CN)**
- **WANG, Shuqiang**
  **Weifang, Shandong 261031 (CN)**
- **LING, Fengguang**
  **Weifang, Shandong 261031 (CN)**
- **LI, Chun**
  **Weifang, Shandong 261031 (CN)**
- **LIU, Chunfa**
  **Weifang, Shandong 261031 (CN)**

(74) Representative: **Hübner, Gerd**
**Rau, Schneck & Hübner**
**Patentanwälte Rechtsanwälte PartGmbB**
**Königstraße 2**
**90402 Nürnberg (DE)**

# (54) VIBRATION DIAPHRAGM OF SOUND PRODUCING DEVICE AND SOUND PRODUCING DEVICE

(57) Disclosed are a diaphragm for a sound generating device and a sound generating device. The vibration diaphragm comprises at least one elastomer layer, wherein the elastomer layer is made of a hydrogenated nitrile butadiene rubber polymer; and the hydrogenated nitrile butadiene rubber polymer comprises acrylonitrile blocks, content of the acrylonitrile blocks in the hydrogenated nitrile butadiene rubber polymer ranging from 10wt% to 70 wt%, a vulcanizing agent is added into the hydrogenated nitrile butadiene rubber polymer, and content of the vulcanizing agent is 1% to 15% of total content of the hydrogenated nitrile butadiene rubber polymer. The diaphragm of the present disclosure has excellent resilience, maintains high elasticity in a low-temperature environment and is capable of long-time working in a high-temperature environment, therefore enabling the sound generating device to be applied in an extremely severe environment while keeping its acoustic performance in an excellent state. (Fig.6)

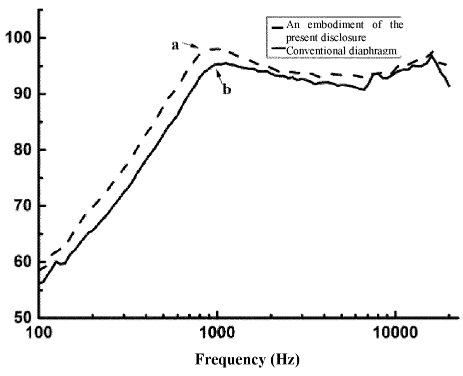


FIG. 6

EP 3 985 996 A1

## Description

### TECHNICAL FIELD

The present disclosure relates to the field of electroacoustic conversion, and in particular to a diaphragm for a sound generating device and a sound generating device.

### BACKGROUND

An existing diaphragm for a sound generating device mostly uses a composite structure of a high-modulus plastic diaphragm layer (polyetheretherketone (PEEK), polyarylate (PAR), polyethylenimine (PEI), polyimide (PI), etc.), a flexible thermoplastic polyurethane elastomer (thermoplastic polyurethane (TPU)) and a damping adhesive film (acrylic adhesive, silica gel, etc.).

However, the existing diaphragm has poor comprehensive performance, such as low elastic recovery rate and poor heat resistance, easily resulting in poor sound listening, causing poor acoustic performance of the sound generating device.

With increasing demands for high power, water resistance and high sound quality, diaphragms made of silicon rubber materials have emerged in the field of sound generating devices. However, silicone rubber has relatively lower modulus or hardness, and on the premise that the same resonant frequency (F0) requirement is met, has poorer damping performance and higher distortion.

### SUMMARY

One objective of the present disclosure is to provide a diaphragm for a sound generating device and a sound generating device.

According to a first aspect of the present disclosure, provided is a diagram for a sound generating device. The diaphragm includes at least one elastomer layer, where the elastomer layer is made of a hydrogenated nitrile butadiene rubber polymer; and the hydrogenated nitrile butadiene rubber polymer includes acrylonitrile blocks, content of the acrylonitrile blocks in the hydrogenated nitrile butadiene rubber polymer ranging from 10wt% to 70 wt%, a vulcanizing agent is added into the hydrogenated nitrile butadiene rubber polymer, and content of the vulcanizing agent is 1% to 15% of total content of the hydrogenated nitrile butadiene rubber polymer.

Optionally, the vulcanizing agent uses at least one of a sulfur-type vulcanizing agent and a peroxide vulcanizing agent.

Optionally, an inorganic filler reinforcing agent is added into the hydrogenated nitrile butadiene rubber polymer, and uses at least one of carbon black, silicon dioxide, calcium carbonate, barium sulfate, organic montmorillonite, unsaturated carboxylic acid metal salt and aramid pulp.

Optionally, content of the inorganic filler reinforcing agent is 1% to 90% of the total content of the hydrogenated nitrile butadiene rubber polymer.

Optionally, an anti-aging agent is added into the hydrogenated nitrile butadiene rubber polymer, and uses at least one of an anti-aging agent N-445, an anti-aging agent 246, an anti-aging agent 4010, an anti-aging agent SP, an anti-aging agent RD, an anti-aging agent ODA, an anti-aging agent OD and an anti-aging agent WH-02.

Optionally, content of the anti-aging agent is 0.5% to 10% of the total content of the hydrogenated nitrile butadiene rubber polymer.

Optionally, strength of the hydrogenated nitrile butadiene rubber polymer ranges from 15 to 95 A, and a modulus of the hydrogenated nitrile butadiene rubber polymer ranges from 0.5 MPa to 50 MPa.

Optionally, a glass transition temperature of the hydrogenated nitrile butadiene rubber polymer ranges from -60°C to 0 °C.

Optionally, a loss factor of the hydrogenated nitrile butadiene rubber polymer at a room temperature is greater than 0.06.

Optionally, the diaphragm is a single-layer diaphragm composed of a hydrogenated nitrile butadiene rubber polymer diaphragm layer;

or the diaphragm is a composite diaphragm, and the composite diaphragm includes two, three, four or five diaphragm layers; and at least includes a hydrogenated nitrile butadiene rubber polymer diaphragm layer.

Optionally, a thickness of the hydrogenated nitrile butadiene rubber polymer diaphragm layer is 10μm to 200μm.

Optionally, the thickness of the hydrogenated nitrile butadiene rubber polymer diaphragm layer is 30μm to 120μm.

According to another aspect of the present disclosure, provided is a sound generating device. The sound generating device includes a vibration system and a magnetic circuit system matching the vibration system, where the

vibration system includes the diaphragm for a sound generating device.

The inventor of the present disclosure finds that a prior art diaphragm has poor comprehensive performance, such as low elastic recovery rate and poor heat resistance, easily resulting in poor sound listening. Therefore, the technical task to be achieved or the technical problem to be solved by the present disclosure is never conceived or not expected by those skilled in the art, and therefore, the present disclosure is a new technical solution.

Advantages of the present disclosure: the present disclosure discloses a diaphragm made of hydrogenated nitrile butadiene rubber polymer, wherein the diaphragm has excellent resilience, maintains high elasticity in a low-temperature environment and is capable of long-time working in a high-temperature environment, therefore enabling the sound generating device to be applied in an extremely severe environment while keeping its acoustic performance in an excellent state.

With reference to the detailed description of the accompanying drawings below on the exemplary embodiments of the present disclosure, other features and advantages of the present disclosure will become more apparent.

BRIEF DESCRIPTION OF THE DRAWINGS

The drawings, which are incorporated into and constitute a part of the description, illustrate the embodiments of the present disclosure and, together with the descriptions of the drawings, are used to explain principles of the present disclosure.

FIG. 1 is a test curve of vibration displacement of different parts of a diaphragm for a sound generating device according to an embodiment of the present disclosure at different frequencies.

FIG. 2 is a test curve of vibration displacement of different parts of a conventional diaphragm at different frequencies.

FIG. 3 is a test curve of harmonic distortion of a diaphragm for a sound generating device according to an embodiment of the present disclosure and a conventional diaphragm.

FIG. 4 is a test curve of higher-order harmonic distortion of a diaphragm for a sound generating device according to an embodiment of the present disclosure and a conventional diaphragm.

FIG. 5 is a stress-strain curve of a diaphragm for a sound generating device according to an embodiment of the present disclosure and a polyetheretherketone (PEEK) diaphragm.

FIG. 6 is a test curve of loudness of a diaphragm for a sound generating device according to an embodiment of the present disclosure and a conventional diaphragm at different frequencies.

**DESCRIPTION OF THE EMBODIMENTS**

Various exemplary embodiments of the present disclosure will now be described in detail with reference to the accompanying drawings. It should be noted that: unless specifically stated otherwise, the relative arrangement of components and steps, numerical expressions, and numerical values set forth in these embodiments do not limit the scope of the present disclosure.

The following description of at least one exemplary embodiment is actually merely illustrative, and in no way serves as any limitation on the present disclosure and its application or use.

Techniques, methods, and apparatuses known to those of ordinary skill in the related field may not be discussed in detail but, where appropriate, should be considered a part of the description.

In all examples shown and discussed herein, any specific values should be interpreted as exemplary only and not as limitations. Therefore, other examples of the exemplary embodiment may have different values.

It should be noted that similar reference numerals and letters in the following drawings represent similar items, and therefore, once an item is defined in one drawing, the item does not need to be further discussed in subsequent drawings.

According to an embodiment of the present disclosure, provided is a diaphragm for a sound generating device. The diaphragm includes at least one elastomer layer, where the elastomer layer is made of a hydrogenated nitrile butadiene rubber polymer. A molecular structural formula of the hydrogenated nitrile butadiene rubber polymer may be shown as follows:

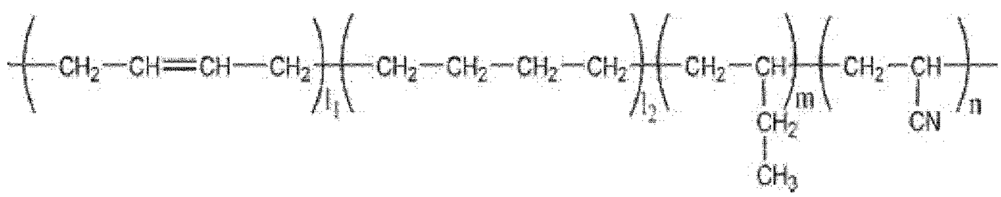

where $l_1$, $l_2$, m and n are natural numbers.

Content of an acrylonitrile block in the hydrogenated nitrile butadiene rubber polymer ranges from 10wt% to 70wt%.

A nitrile group in the acrylonitrile block is a strongly polar group, has high electronegativity and may form a hydrogen bond with vulcanized rubber to limit movement of a molecular chain; and a glass transition temperature of the hydrogenated nitrile butadiene rubber polymer is increased, but the glass transition temperature may not be too high, if the glass transition temperature is too high, the hydrogenated nitrile butadiene rubber polymer is easily transitioned from a highly elastic state (rubbery state) to a glassy state, normal use of the sound generating device is not facilitated, and therefore, the hydrogenated nitrile butadiene rubber polymer of the present disclosure has high molecular weight, the molecular chain of the hydrogenated nitrile butadiene rubber polymer is flexible, the hydrogenated nitrile butadiene rubber polymer has excellent low-temperature resistance, and the glass transition temperature is -60-0 °C, which enables the diaphragm for a sound generating device to be kept in the highly elastic state at a room temperature and have excellent resilience. Preferably, the glass transition temperature of the hydrogenated nitrile butadiene rubber polymer is -50--20°C, which enables the diaphragm for the sound generating device to keep excellent rubber elasticity all the time when working when the temperature is lower than 0 °C, such that the sound generating device shows high sound quality; and meanwhile, a risk that the diaphragm for a sound generating device is broken in a low-temperature environment is reduced, and the reliability is higher.

The higher the content of the acrylonitrile block is, the more hydrogen bond structures may be formed by the acrylonitrile block and the vulcanized rubber, where the more alternate structural units are, the higher tensile strength of the hydrogenated nitrile butadiene rubber polymer is. Table 1 is a relational table of the content of the acrylonitrile block and the glass transition temperature and the tensile strength. Glass transition temperature: a polymer material may generally be in the following four physical states (or mechanical states): a glassy state, a viscoelastic state, a highly elastic state (rubbery state) and a viscous flow state, transition between the glassy state and the highly elastic state is generally referred to as glass transition, and the transition temperature corresponding thereto is the glass transition temperature. The tensile strength is capability of the rubber to resist permanent deformation and breakage under an action of an external force.

Table 1: relational table of content of acrylonitrile block and glass transition temperature and tensile strength

| Content of acrylonitrile block (wt%) | 5 | 10 | 70 | 75 |
|---|---|---|---|---|
| Glass transition temperature (°C) | -35.1 | -32.1 | -22.8 | -19.4 |
| Tensile strength (MPa) | 22.5 | 25.3 | 29.0 | 33.2 |

As shown in table 1, the inventor finds that along with gradual increase of the content of the acrylonitrile block, the glass transition temperature is gradually increased, and the tensile strength is gradually increased, but the higher the glass transition temperature is, the state of the hydrogenated nitrile butadiene rubber polymer is easily transitioned from the highly elastic state to the glassy state, and resilience of the hydrogenated nitrile butadiene rubber polymer is reduced. The higher the tensile strength is, the stronger the capability of the hydrogenated nitrile butadiene rubber polymer to resist permanent deformation and breakage is. The content of the acrylonitrile block in the hydrogenated nitrile butadiene rubber polymer ranges from 10wt% to 70wt%, the glass transition temperature ranges from -32.1°C to -22.8°C, and the diaphragm for a sound generating device may keep excellent rubber elasticity all the time when working at -20 °C, such that the sound generating device shows high sound quality. Meanwhile, the risk that the diaphragm for a sound generating device is broken in a low-temperature environment is reduced, and the reliability is higher; and the content of the acrylonitrile block is 10wt% to 70 wt% of total content of the hydrogenated nitrile butadiene rubber polymer, the tensile strength ranges from 25.3 MPa to 29.0 MPa, when the hydrogenated nitrile butadiene rubber polymer is made into the diaphragm, the diaphragm is made into various shapes in order to adapt to sound generating devices having various shapes, and in a process that the diaphragm is mounted in the sound generating device, the capability to resist permanent deformation and breakage is high under the action of the external force.

Optionally, the hydrogenated nitrile butadiene rubber polymer further includes a vulcanizing agent, where the vulcanizing agent uses at least one of a sulfur-type vulcanizing agent and a peroxide vulcanizing agent. Content of the vulcanizing agent is 1% to 15% of the total content of the hydrogenated nitrile butadiene rubber polymer, that is, when the total content of the hydrogenated nitrile butadiene rubber polymer is 100 parts, the content of the vulcanizing agent is 1 to 15 parts. Table 2 is a relational table between the content of the vulcanizing agent and the glass transition temperature and elongation at break. The elongation at break is an indicator that measures elastic performance of the rubber.

Table 2: relational table of content of vulcanizing agent and glass transition temperature and elongation at break

| Vulcanizing agent (parts) | 0.5 | 1 | 3 | 10 | 15 | 18 |
|---|---|---|---|---|---|---|
| Glass transition temperature (°C) | -32.6 | -31.7 | -27.2 | -23.1 | -21.8 | -20.1 |
| Elongation at break (%) | 371 | 352 | 327 | 271 | 198 | 156 |

As shown in table 2, the inventor finds that along with the increase of use amount of the vulcanizing agent, a cross-linking degree of the material is increased, the movement of the molecular chain is limited, the glass transition temperature is increased, and the elongation at break is reduced. The greater elongation at break gives greater vibration interval allowance to the diaphragm, the hydrogenated nitrile butadiene rubber polymer may bear higher driving force under the condition of being close to a break limit, and the stretching of the hydrogenated nitrile butadiene rubber polymer in a vibration process may not reach the break limit under the same vibration space, such that the condition of diaphragm breakage caused by excessive stretching may be avoided.

Preferably, when the content of the vulcanizing agent is 3%-10% of the total content of the hydrogenated nitrile butadiene rubber polymer, that is, when the total content of the hydrogenated nitrile butadiene rubber polymer is 100 parts and the content of the vulcanizing agent is 3 to 10 parts, the hydrogenated nitrile butadiene rubber polymer has high elasticity, and meanwhile, the elongation at break meets a manufacturing requirement of the diaphragm, and elasticity and rigidity of the diaphragm meet a vibration requirement, and the sound generating device has excellent vibration effect and damping resistance effect.

The hydrogenated nitrile butadiene rubber polymer has excellent flexibility, of which the elongation at break is greater than 100%, which is preferably greater than 150%. The hydrogenated nitrile butadiene rubber polymer has the high elongation at break, such that reliability problems of diaphragm breakage, etc. are not easy to occur when the diaphragm is used in the sound generating device.

Optionally, an inorganic filler reinforcing agent is added into the hydrogenated nitrile butadiene rubber polymer, the inorganic filler reinforcing agent uses at least one of carbon black, silicon dioxide, calcium carbonate, barium sulfate, organic montmorillonite, unsaturated carboxylic acid metal salt and aramid pulp, and content of the inorganic filler reinforcing agent is 1% to 90% of the total content of the hydrogenated nbutadiene-acrylonitrile rubber polymer. That is, when the total content of the hydrogenated nitrile butadiene rubber polymer is 100 parts, the total content of the inorganic filler reinforcing agent is 1-90 parts. A surface of the reinforcing agent has groups of hydrogen, carboxyl, lactone group, free radical, quinonyl, etc. which may undergo reactions of substitution, reduction, oxidation, etc. After the reinforcing agent is mixed into the hydrogenated nitrile butadiene rubber polymer, due to strong interaction between the reinforcing agent and an interface of a polymer block, when the material is stressed, it is easy for the molecular chain to slide on surfaces of particles of the reinforcing agent, but it is not easy for the molecular chain to separate from the particles of the reinforcing agent, and the hydrogenated nitrile butadiene rubber polymer and the particles of the reinforcing agent form a slidable strong bond, and mechanical strength is increased. Table 3 is a relational table between addition parts of the carbon black and the elongation at break and the tensile strength of the hydrogenated nitrile butadiene rubber polymer.

Table 3: relational table of addition parts of carbon black and elongation at break and tensile strength of hydrogenated nitrile butadiene rubber polymer

| Addition parts (%) of carbon black | 0 | 1 | 2 | 80 | 90 | 95 |
|---|---|---|---|---|---|---|
| Elongation at break (%) | 239 | 432 | 418 | 345 | 256 | 161 |
| Tensile strength (MPa) | 4.5 | 10.2 | 13.8 | 27.3 | 30.1 | 33.6 |

In the present disclosure, carbon black is taken as an example. Carbon black is of an amorphous structure, and particles form aggregates by means of physical and chemical combination between the particles. A primary structure of the carbon black is composed of the aggregates, and meanwhile, there are van der waals forces or hydrogen bonds between the aggregates, thereby aggregating the aggregates into a space network structure, that is, a secondary structure of the carbon black. A surface of the carbon black has the above groups. The particles of the carbon black may form the above relation with the molecular chain of the polymer, thereby enhancing mechanical strength of the hydrogenated nitrile butadiene rubber polymer. However, if the mechanical strength is too high, the resonant frequency of the miniature sound generating device is too high, and low-frequency response capability is reduced.

As shown in table 3, when no carbon black is added into the hydrogenated nitrile butadiene rubber polymer,

the tensile strength of the hydrogenated nitrile butadiene rubber polymer is 4.5 MPa, for example, under the action of the external force, capability to resist breakage of the hydrogenated nitrile butadiene rubber polymer is weak in a process of manufacturing the diaphragm, but the tensile strength of the hydrogenated nitrile butadiene rubber polymer is sharply changed with addition of 1 part of the carbon black.

When the carbon black is 0.5 part, the mechanical strength and the elongation at break of the material are small since the amount of the carbon black is small, the carbon black is not evenly dispersed in a matrix, and a reinforcing effect is difficult to achieve; along with increase of the addition parts of the carbon black, the mechanical strength of the hydrogenated nitrile butadiene rubber polymer is increased, and the elongation at break is gradually reduced; and however, when the carbon black is 95 parts, the elongation at break of the hydrogenated nitrile butadiene rubber polymer is sharply reduced, and after the diaphragm is made, there is the risk of diaphragm breakage in long-term use.

In the present disclosure, addition amount of the reinforcing agent is 1 to 90 parts, which is preferably 2 to 80 parts, that is, when the content of the inorganic filler reinforcing agent is 2% to 80% of the total content of the hydrogenated nitrile butadiene rubber polymer, the tensile strength of the hydrogenated nitrile butadiene rubber polymer is improved along with the increase of the content of the reinforcing agent. The greater elongation at break gives greater vibration interval allowance to the diaphragm, the hydrogenated nitrile butadiene rubber polymer may bear higher driving force under the condition of being close to a break limit, and the stretching of the hydrogenated nitrile butadiene rubber polymer in a vibration process may not reach the break limit under the same vibration space, such that the condition of diaphragm breakage caused by excessive stretching may be avoided. The hydrogenated nitrile butadiene rubber polymer has excellent flexibility, of which the elongation at break is greater than 100%, which is preferably greater than 150%. Therefore, particularly, when the content of the reinforcing agent is 80 parts, that is, the content of the inorganic filler reinforcing agent is 80% of the total content of the hydrogenated nitrile butadiene rubber polymer, the elongation at break of the hydrogenated nitrile butadiene rubber polymer meets the manufacturing requirement of the diaphragm, and meanwhile, the capability to resist permanent deformation and breakage is strong, the elasticity and rigidity of the diaphragm meet the vibration requirement, and the sound generating device has excellent vibration effect and damping resistance effect.

Optionally, the hydrogenated nitrile butadiene rubber polymer further includes an anti-aging agent, the anti-aging agent uses at least one of an anti-aging agent N-445, an anti-aging agent 246, an anti-aging agent 4010, an anti-aging agent SP, an anti-aging agent RD, an anti-aging agent ODA, an anti-aging agent OD and an anti-aging agent WH-02, and content of the anti-aging agent is 0.5% to 10% of total content of the four units. When the total content of the four units is 100 parts, the content of the anti-aging agent is 0.5 to 10 parts.

The inventor finds that in a process of using the hydrogenated nitrile butadiene rubber polymer, as time is prolonged, the molecular chain of the hydrogenated nitrile butadiene rubber polymer is broken to generate free radicals, thereby accelerating self-aging, and the anti-aging agent is added to stop the autocatalytic active free radicals generated in the rubber product. The effect of prolonging service life may not be achieved due to too small addition amount, and mechanical performance of the material is reduced since the anti-aging agent may not be well dissolved with an elastomer and is difficult to evenly disperse due to too much addition amount. The content of the anti-aging agent is 0.5% to 10% of the total content of the hydrogenated nitrile butadiene rubber polymer, that is, when the total content of the hydrogenated nitrile butadiene rubber polymer is 100 parts, the addition amount of the anti-aging agent is 0.5 to 10 parts, which is preferably is 1 to 5 parts, that is, the content of the anti-aging agent is 1% to 5% of the total content of the hydrogenated nitrile butadiene rubber polymer, and particularly, when the content of the anti-aging agent is 5 parts, that is, the content of the anti-aging agent is 5% of the total content of the hydrogenated nitrile butadiene rubber polymer, the autocatalytic active free radicals generated in the rubber product may be effectively stopped, the anti-aging agent may be preferably fused with the hydrogenated nitrile butadiene rubber polymer, and when the hydrogenated nitrile butadiene rubber polymer is made into the diaphragm, the service life of the diaphragm may be prolonged.

Optionally, strength of the hydrogenated nitrile butadiene rubber polymer ranges from 15 A to 95 A, and a modulus of the hydrogenated nitrile butadiene rubber polymer ranges from 0.5 MPa to 50 MPa. It may be seen from table 3 that the tensile strength of the hydrogenated nitrile butadiene rubber polymer is mainly adjusted by means of the inorganic filler reinforcing agent. It may be seen from table 1 that the content of the acrylonitrile block is increased, and hydrogen bonds between molecules of the hydrogenated nitrile butadiene rubber polymer are increased, such that the tensile strength of the hydrogenated nitrile butadiene rubber polymer is increased; and the higher the tensile strength and hardness of the hydrogenated nitrile butadiene rubber polymer are, the higher a resonant frequency (F0) of the hydrogenated nitrile butadiene rubber polymer is, and the more excellent the resilience of the hydrogenated nitrile butadiene rubber polymer is. Table 4 is a relational table of the diaphragm having the same thickness and different hardness and the F0 of the hydrogenated nitrile butadiene rubber polymer.

Table 4: relational table of diaphragm having same thickness and different hardness and F0 of hydrogenated nitrile butadiene rubber polymer

| Hardness (A) | 20 | 30 | 60 | 80 | 90 |
|---|---|---|---|---|---|
| F0 (Hz) | 678 | 735 | 862 | 941 | 1109 |

As shown in table 4, along with increase of the hardness, the F0 is sharply increased. When the strength of the hydrogenated nitrile butadiene rubber polymer ranges from 15 A to 95 A, preferably, the strength of the hydrogenated nitrile butadiene rubber polymer ranges from 20 A to 80 A, resilience of the hydrogenated nitrile butadiene rubber polymer is excellent, and when the hydrogenated nitrile butadiene rubber polymer is made into the diaphragm, consistency of elasticity and vibration of the diaphragm is excellent.

The hydrogenated nitrile butadiene rubber polymer contains lots of nitrile groups, and the nitrile groups may form hydrogen bond interaction with an adhesive layer, such that the hydrogenated nitrile butadiene rubber polymer has excellent adhesiveness.

Optionally, an adhesive force of the hydrogenated nitrile butadiene rubber polymer and the adhesive layer is greater than 100g/25 mm (180° peel), which is preferably greater than 200g/25mm (180° peel). The adhesive force is high, such that the diaphragm has excellent coordination and consistency with a reinforcement (DOME) in the vibration process, the sound quality is pure, and after long-time vibration, the diaphragm for a sound generating device is still kept in an initial state, and has high performance stability.

The adhesive force of the diaphragm mainly has effects in two aspects. In a particular implementation of the present disclosure, the diaphragm may be a composite diaphragm, that is, the diaphragm includes a plurality of diaphragm layers, at least one of which is made of the above hydrogenated nitrile butadiene rubber polymer. The plurality of diaphragm layers may be compounded in manners of adhesion, hot pressing, etc., thereby forming the above composite diaphragm. The excellent adhesiveness of the hydrogenated nitrile butadiene rubber polymer may ensure structural stability and reliability of the composite diaphragm. On the other hand, the diaphragm needs to adhere and be assembled to a voice coil, a centering disk, the reinforcement (DOME), etc. by means of the adhesive layer in practical application. The excellent adhesiveness of the diaphragm may have an effect in assembly, thereby improving acoustic performance and structural reliability of a micro sounder product are improved.

Optionally, the adhesive layer includes one or more of epoxy, acrylic acid, organic silicone resin, polyester, polyurethane, vinyl chloride-vinyl acetate resin, phenolic resin and urea formaldehyde resin.

Optionally, the diaphragm is prepared in a mode of mold pressing-injection molding or air pressure molding.

A loss factor may represent damping performance of the material, and the loss factor of the hydrogenated nitrile butadiene rubber polymer is greater than 0.06, which is preferably greater than 0.1, and the excellent damping performance enables the diaphragm to have lower impedance. The damping performance of the diaphragm for a sound generating device is improved, such that the sound generating device has strong capability to restrain polarization and excellent vibration consistency in the vibration process. A diaphragm layer of commonly used engineering plastic has low damping, of which a loss factor is generally less than 0.01, and damping performance is small.

Compared with the engineering plastic, the hydrogenated nitrile butadiene rubber polymer has a wide elastic area and excellent resilience, and the diaphragm has little swing vibration and more excellent sound quality and sound listening stability in the vibration process.

FIG. 5 is a stress-strain curve of a diaphragm for a sound generating device according to an embodiment of the present disclosure and a polyetheretherketone (PEEK) diaphragm, where a dotted line is a stress-strain curve of the diaphragm for a sound generating device provided by the embodiment of the present disclosure, and a solid line is a stress-strain curve of the PEEK diaphragm.

It may be seen from FIG. 5 that under the same stress, strain of the diaphragm for a sound generating device provided by the embodiment of the present disclosure is obviously greater than that of the PEEK diaphragm, which indicates that the Young modulus of the diaphragm for a sound generating device provided by the embodiment of the present disclosure is obviously less than that of the PEEK diaphragm.

In addition, the PEEK diaphragm has an obvious yield point, which is about 0.4%-0.5% strain. The diaphragm for a sound generating device provided by the present disclosure does not have a yield point, which indicates that the diaphragm for a sound generating device provided by the present disclosure has the wider elastic area and has excellent resilience.

The diaphragm made of the hydrogenated nitrile butadiene rubber polymer has excellent flexibility, for example, the elongation at break $\geq$100%. A polyethylene block has an important effect on the elongation at break, which may be selected by those skilled in the art according to actual needs, which enables vibration displacement and loudness of the diaphragm for a sound generating device to be greater, and enables the diaphragm to have excellent reliability and durability. The more excellent the flexibility of the material is, the stronger the elongation at break is, and the stronger

the capability of the diaphragm for a sound generating device to resist breakage is. When the diaphragm for a sound generating device vibrates in a great-amplitude state, the material generates great strain, and the risk of diaphragm folding, diaphragm cracking or diaphragm breakage may occur during long-time vibration. The diaphragm for a sound generating device prepared from the hydrogenated nitrile butadiene rubber polymer has excellent flexibility, thereby reducing the risk of diaphragm breakage.

Fig. 6 is a test curve (sound pressure level (SPL) curve) of loudness of a diaphragm for a sound generating device according to an embodiment of the present disclosure and a conventional diaphragm at different frequencies, where the diaphragm in the present disclosure is a folded ring diaphragm; an abscissa is frequency (Hz) and an ordinate is loudness; and a dotted line is a test curve of the diaphragm for a sound generating device provided by the embodiment of the present disclosure, and a solid line is a test curve of the conventional diaphragm.

It may be seen from FIG. 6, particularly from the SPL curve, that medium-frequency performance of the two diaphragms for sound generating devices is similar. The F0 of the sound generating device using the diaphragm of the embodiment of the present disclosure is 792 Hz, i.e. position a in the figure; and the F0 of the sound generating device using the conventional diaphragm is 886 Hz, i.e. position b in the figure, which indicates that low-frequency sensitivity of the diaphragm for a sound generating device of the embodiment of the present disclosure is higher than that of the PEEK diaphragm. That is, the sound generating device using the diaphragm for a sound generating device of the embodiment of the present disclosure has higher loudness and comfort level.

FIG. 1 is a test curve of vibration displacement of different parts of a diaphragm for a sound generating device according to an embodiment of the present disclosure at different frequencies, and FIG. 2 is a test curve of vibration displacement of different portions of a conventional diaphragm at different frequencies, where the diaphragm is a rectangular folded ring diaphragm; and an abscissa is frequency (Hz), and an ordinate is loudness displacement (mm). Points are taken at an edge position of a central part and the central part of the diaphragm for testing.

It may be seen that curves in FIG. 1 are more concentrated, while curves in FIG. 2 are more dispersed, indicating that vibration consistency of parts of the diaphragm for a sound generating device is more excellent, while in the vibration process, swing of the diaphragm is truly little, and the sound quality and the sound listening stability are more excellent.

FIG. 3 is a test curve of total harmonic distortion of a diaphragm for a sound generating device according to an embodiment of the present disclosure and a conventional diaphragm, where the diaphragm is a folded ring diaphragm; an abscissa is frequency (Hz) and an ordinate is total harmonic distortion (THD) (%); and a dotted line is a test curve of total harmonic distortion of the diaphragm for a sound generating device provided by the embodiment of the present disclosure, and a solid line is a test curve of total harmonic distortion of the conventional PEEK diaphragm.

It may be seen from FIG. 3 that the diaphragm for a sound generating device of the embodiment of the present disclosure has lower THD relative to the PEEK diaphragm, is free of peaks, etc, which indicates that the diaphragm for a sound generating device of the embodiment of the present disclosure has more excellent polarization resistance and sound quality.

FIG. 4 is a test curve of higher-order harmonic distortion of a diaphragm for a sound generating device according to an embodiment of the present disclosure and a conventional diaphragm, where the diaphragm is a folded ring diaphragm; an abscissa is frequency (Hz) and an ordinate is higher-order harmonic distortion (HOHD) (%); and a dotted line is a test curve of higher-order harmonic distortion of the diaphragm for a sound generating device provided by the embodiment of the present disclosure, and a solid line is a test curve of higher-order harmonic distortion of the conventional PEEK diaphragm.

It may be seen from FIG. 4 that the diaphragm for a sound generating device of the embodiment of the present disclosure has lower HOHD relative to the PEEK diaphragm, is free of peaks, etc. Under the condition of the same frequency, the PEEK diaphragm is more prone to HOHD, which indicates that the diaphragm for a sound generating device in the embodiment of the present disclosure has more excellent polarization resistance and sound quality.

According to another embodiment of the present disclosure, provided is a sound generating device. The sound generating device includes a vibration system and a magnetic circuit system matching the vibration system, where the vibration system includes the diaphragm for a sound generating device provided by the present disclosure. For example, the diaphragm is a folded ring diaphragm or a flat plate diaphragm. The sound generating device has the characteristics of excellent sound generating effect and durability.

A F0 of the sound generating device is proportional to a Young modulus and a thickness, a change of the F0 may be achieved by changing the thickness and the Young modulus of the diaphragm for the sound generating device, and a specific adjustment principle is as follows:

$$F0 = \frac{1}{2\pi}\sqrt{\frac{1}{CmsMms}}$$

where Mms is equivalent vibration mass of the sound generating device, and Cms is equivalent compliance of the sound generating device:

$$Cms = \frac{(C_{m1} * C_{m2})}{(C_{m1} + C_{m2})}$$

where Cms1 is damper compliance, and Cms2 is diaphragm compliance. In a damper-free design, the equivalent compliance of the sound generating device is the diaphragm compliance:

$$C_{m2} = \frac{(1 - u^3)W^3}{\pi(W + dvc)t^3 Ea_1 a_2}$$

where w is a total width of a corrugated rim part of the diaphragm, t is the thickness of the diaphragm, dvc is a fitting outer diameter of the diaphragm and a voice coil, E is the Young modulus of a material of the diaphragm, and u is a poisson ratio of the material of the diaphragm.

It may be seen that the F0 of the sound generating device is proportional to the modulus and the thickness, while the modulus of the diaphragm is proportional to the hardness of the diaphragm, and therefore, the hardness is used to reflect the modulus of the diaphragm. In order to obtain full bass and comfortable hearing, the diaphragm should have sufficient rigidity and damping while the sound generating device has the low F0. Those skilled in the art may adjust the size of the F0 by means of the hardness and thickness of the diaphragm for a sound generating device. The hardness of the diaphragm is preferably 20-80 A, which enables the F0 of the sound generating device to reach 150-1500 Hz, such that low-frequency performance of the sound generating device is excellent.

Optionally, the diaphragm may be of a single-layer structure or may be of a multi-layer composite diaphragm. The single-layer diaphragm is a diaphragm formed by a hydrogenated nitrile butadiene rubber polymer diaphragm layer. The composite diaphragm is a diaphragm formed by sequentially laminating a plurality of hydrogenated nitrile butadiene rubber polymer diaphragm layers. Or, the composite diaphragm may include at least one hydrogenated nitrile butadiene rubber polymer diaphragm layer, and the hydrogenated nitrile butadiene rubber polymer diaphragm layer is laminated and compounded with diaphragm layers made of other materials to form the composite diaphragm made of multiple materials. The composite diaphragm may be a two-layer, three-layer, four-layer or five-layer composite diaphragm, which is not limited by the present disclosure. At least one diaphragm layer in the composite diaphragm is the hydrogenated nitrile butadiene rubber polymer diaphragm layer made of the hydrogenated nitrile butadiene rubber polymer provided by the present disclosure.

A thickness of the hydrogenated nitrile butadiene rubber polymer diaphragm layer is optionally 10μm to 200 μm, which is preferably 30μm to 120 μm. When the thickness of the hydrogenated nitrile butadiene rubber polymer diaphragm layer is within the range, performance requirements and assembly space requirements of the miniature sound generating device may be preferably met.

The composite diaphragm is formed by compounding hydrogenated nitrile butadiene rubber with different hardness, for example, the hardness of the diaphragm layer of the composite diaphragm is gradually increased from top to bottom, a diaphragm layer of a substrate layer is made of a hydrogenated nitrile butadiene rubber polymer having high hardness, the diaphragm has strong rigidity while having high hardness, and the diaphragm layer of the substrate layer have an effect of centering and supporting an upper diaphragm layer. The hardness of the upper diaphragm layer is small, such that resilience of the upper diaphragm layer is strong, and a amplitude of the diaphragm is great. The "amplitude" refers to an unidirectional maximum value at which the diaphragm deviates from an equilibrium position. When the amplitude of the diaphragm is great, a sound listening effect of the sound generating device is excellent.

Optionally, the thickness of each layer of diaphragm of the composite diaphragm is the same, which enables the diaphragm for the sound generating device to have excellent uniformity and to be not prone to curling and wrinkling.

Optionally, the composite diaphragm may further be made by compounding the hydrogenated nitrile butadiene rubber polymer and other rubbers, or compounding the hydrogenated nitrile butadiene rubber polymer and other engineering plastics or thermoplastic elastomers in a fitting manner.

Although some specific embodiments of the present disclosure are described in detail by means of examples, those skilled in the art should understand that the above examples are merely for illustration instead of limitation of the scope of the present disclosure. Those skilled in the art should understand that modifications to the above embodiments

may be made without departing from the scope and spirit of the present disclosure. The scope of the present disclosure is defined by the appended claims.

## Claims

1. A diaphragm for a sound generating device, comprising at least one elastomer layer, wherein the elastomer layer is made of a hydrogenated nitrile butadiene rubber polymer; and the hydrogenated nitrile butadiene rubber polymer comprises acrylonitrile blocks, content of the acrylonitrile blocks in the hydrogenated nitrile butadiene rubber polymer ranging from 10wt% to 70 wt%, a vulcanizing agent is added into the hydrogenated nitrile butadiene rubber polymer, and content of the vulcanizing agent is 1% to 15% of total content of the hydrogenated nitrile butadiene rubber polymer.

2. The diaphragm according to claim 1, wherein the vulcanizing agent uses at least one of a sulfur-type vulcanizing agent and a peroxide vulcanizing agent.

3. The diaphragm according to claim 1, wherein an inorganic filler reinforcing agent is added into the hydrogenated nitrile butadiene rubber polymer, and uses at least one of carbon black, silicon dioxide, calcium carbonate, barium sulfate, organic montmorillonite, unsaturated carboxylic acid metal salt and aramid pulp.

4. The diaphragm according to claim 3, wherein content of the inorganic filler reinforcing agent is 1% to 90% of the total content of the hydrogenated nitrile butadiene rubber polymer.

5. The diaphragm according to claim 1, wherein an anti-aging agent is added into the hydrogenated nitrile butadiene rubber polymer, and uses at least one of an anti-aging agent N-445, an anti-aging agent 246, an anti-aging agent 4010, an anti-aging agent SP, an anti-aging agent RD, an anti-aging agent ODA, an anti-aging agent OD and an anti-aging agent WH-02.

6. The diaphragm according to claim 5, wherein content of the anti-aging agent is 0.5%-10% of the total content of the hydrogenated nitrile butadiene rubber polymer.

7. The diaphragm according to any one of claims 1-6, wherein strength of the hydrogenated nitrile butadiene rubber polymer ranges from 15 to 95 A, and a modulus of the hydrogenated nitrile butadiene rubber polymer ranges from 0.5 to 50 MPa.

8. The diaphragm according to any one of claims 1-6, wherein a glass transition temperature of the hydrogenated nitrile butadiene rubber polymer ranges from -60 to 0 °C.

9. The diaphragm according to any one of claims 1-6, wherein a loss factor of the hydrogenated nitrile butadiene rubber polymer at a room temperature is greater than 0.06.

10. The diaphragm according to claim 1, wherein the diaphragm is a single-layer diaphragm composed of a hydrogenated nitrile butadiene rubber polymer diaphragm layer;
or the diaphragm is a composite diaphragm, and the composite diaphragm comprises two, three, four or five diaphragm layers; and at least comprises a hydrogenated nitrile butadiene rubber polymer diaphragm layer.

11. The diaphragm according to claim 10, wherein a thickness of the hydrogenated nitrile butadiene rubber polymer diaphragm layer is 10μm to 200 μm.

12. The diaphragm according to claim 11, wherein the thickness of the hydrogenated nitrile butadiene rubber polymer diaphragm layer is 30μm to 120 μm.

13. A sound generating device, comprising a vibration system and a magnetic circuit system matching the vibration system, wherein the vibration system comprises the diaphragm for a sound generating device of any one of claims 1 to 12.

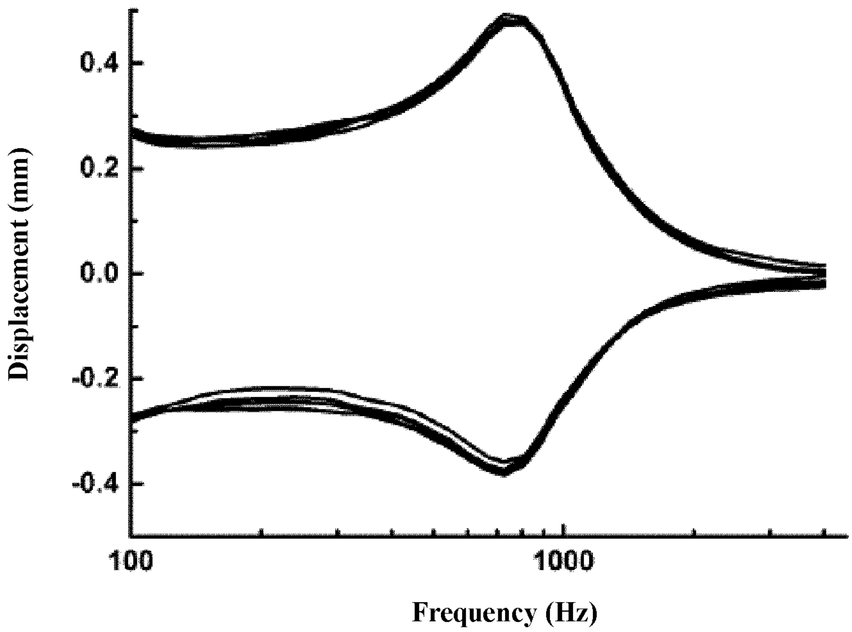
0.4
0.2
0.0
-0.2
-0.4
Displacement (mm)
100
1000
Frequency (Hz)

FIG. 1

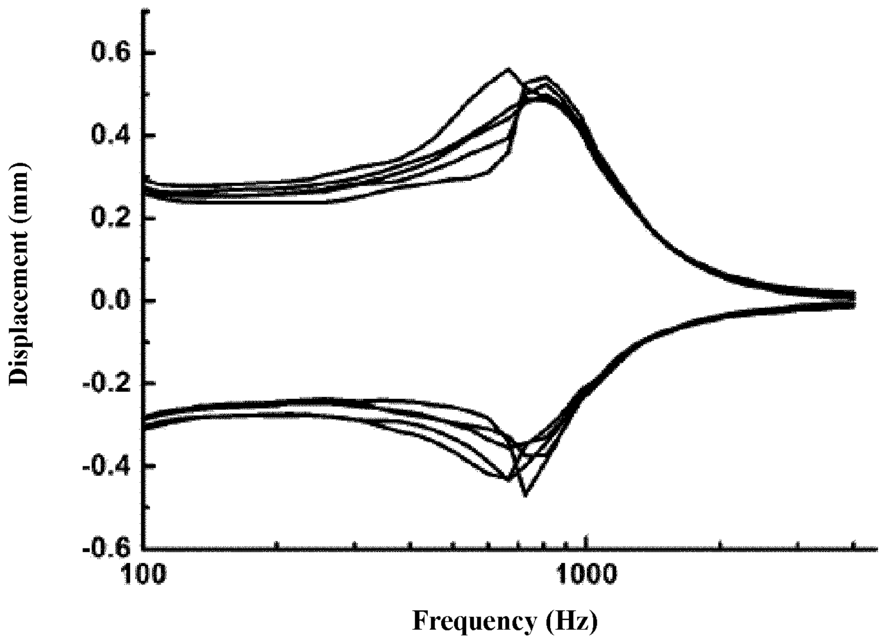
0.6
0.4
0.2
0.0
-0.2
-0.4
-0.6
Displacement (mm)
100
1000
Frequency (Hz)

FIG. 2

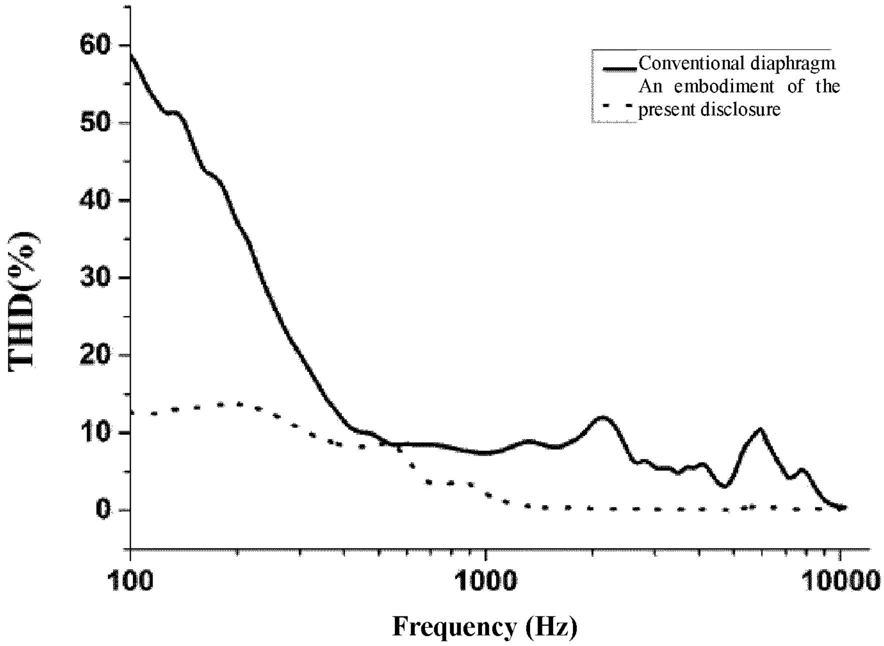
Conventional diaphragm
An embodiment of the present disclosure
THD(%)
60
50
40
30
20
10
0
100
1000
10000
Frequency (Hz)

FIG. 3

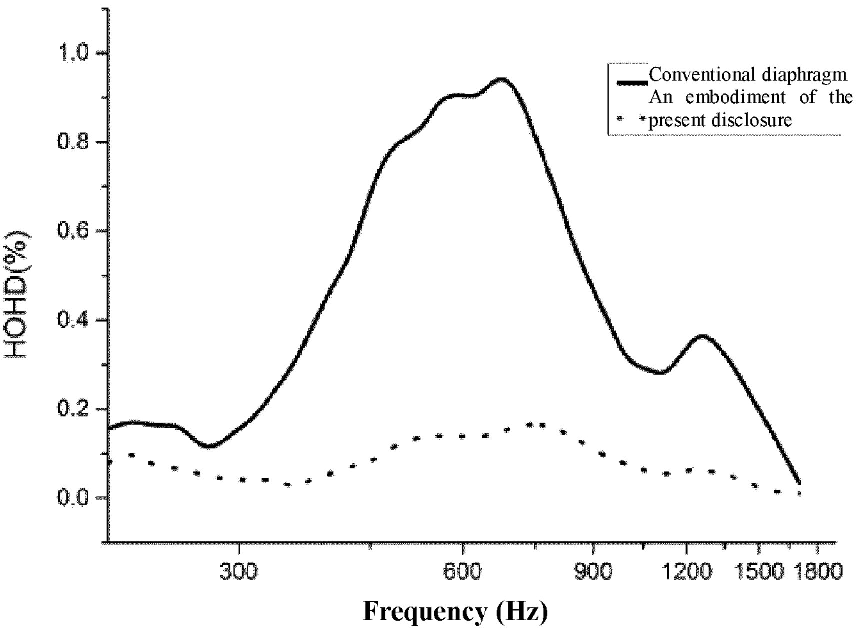
Conventional diaphragm
An embodiment of the present disclosure
HOHD(%)
1.0
0.8
0.6
0.4
0.2
0.0
300
600
900
1200
1500
1800
Frequency (Hz)

FIG. 4

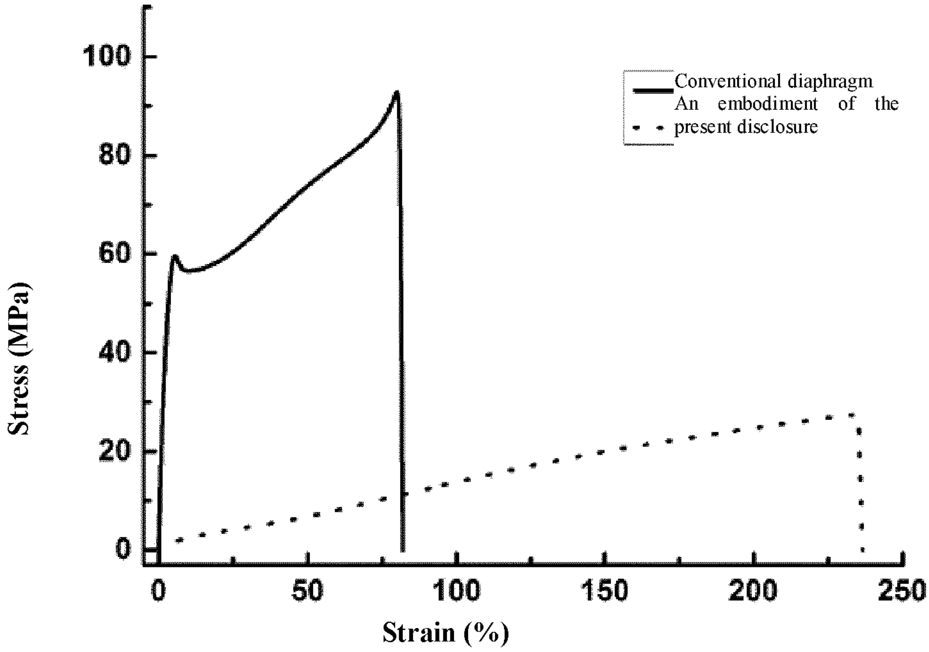
Stress (MPa)
100
80
60
40
20
0
0
50
100
150
200
250
Strain (%)
Conventional diaphragm
An embodiment of the present disclosure

FIG. 5

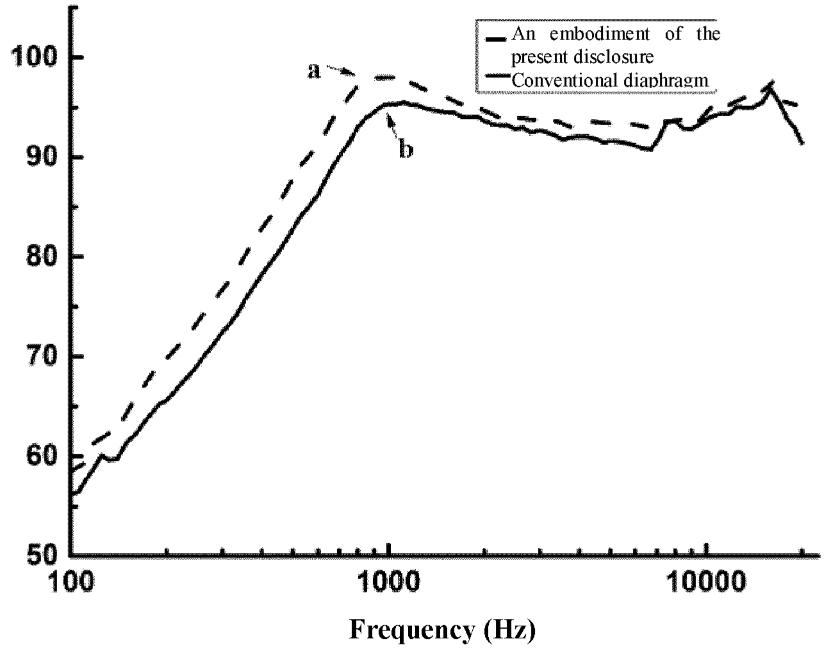
100
90
80
70
60
50
100
1000
10000
Frequency (Hz)
a
b
An embodiment of the present disclosure
Conventional diaphragm

FIG. 6

## INTERNATIONAL SEARCH REPORT

International application No.
**PCT/CN2020/085753**

**A. CLASSIFICATION OF SUBJECT MATTER**

H04R 7/14(2006.01)i

According to International Patent Classification (IPC) or to both national classification and IPC

**B. FIELDS SEARCHED**

Minimum documentation searched (classification system followed by classification symbols)

H04R; C08L; C08K

Documentation searched other than minimum documentation to the extent that such documents are included in the fields searched

Electronic data base consulted during the international search (name of data base and, where practicable, search terms used)

CNPAT, CNKI, WPI, EPODOC: 发声, 扬声, 喇叭, 音响, 音箱, 耳机, 振膜, 氢化丁腈, 丙烯腈, 硫化剂, speaker, diaphragm, Hydrogenated Nitrile Rubber, acrylonitrile, vulcanizing agent

**C. DOCUMENTS CONSIDERED TO BE RELEVANT**

| Category* | Citation of document, with indication, where appropriate, of the relevant passages | Relevant to claim No. |
|---|---|---|
| PX | CN 110267167 A (GOERTEK INC.) 20 September 2019 (2019-09-20)<br>claims 1-13 | 1-13 |
| Y | CN 106957466 A (AAC TECHNOLOGIES (SINGAPORE) CO., LTD.) 18 July 2017 (2017-07-18)<br>description paragraphs 3, 25-59 | 1-13 |
| Y | 李敏 (LI, Min). "氢化丁腈橡胶性能研究 (non-official translation: Study on the characteristics of hydrogenated nitrile rubber)"<br>*世界橡胶工业 (World Rubber Industry)*, Vol. 29, No. 1, 28 February 2002 (2002-02-28),<br>sections 1 and 2 | 1-13 |
| A | CN 106817658 A (AAC TECHNOLOGIES (SHUYANG) CO., LTD. et al.) 09 June 2017 (2017-06-09)<br>entire document | 1-13 |
| A | US 2015208148 A1 (BOSE CORPORATION) 23 July 2015 (2015-07-23)<br>entire document | 1-13 |
| A | US 2017251307 A1 (OHARA, Hiroshi) 31 August 2017 (2017-08-31)<br>entire document | 1-13 |

☐ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **28 June 2020** | **21 July 2020** |

| Name and mailing address of the ISA/CN | Authorized officer |
|---|---|
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2020/085753**

| Patent document cited in search report | Publication date (day/month/year) | Patent family member(s) | Publication date (day/month/year) |
|---|---|---|---|
| CN 110267167 A | 20 September 2019 | None | |
| CN 106957466 A | 18 July 2017 | None | |
| CN 106817658 A | 09 June 2017 | None | |
| US 2015208148 A1 | 23 July 2015 | WO 2015112459 A1 | 30 July 2015 |
| US 2017251307 A1 | 31 August 2017 | TW 201731303 A | 01 September 2017 |

Form PCT/ISA/210 (patent family annex) (January 2015)